(19) Europäisches Patentamt
European Patent Office
Office européen des brevets

(11) **EP 3 721 331 B1**

(12) **EUROPEAN PATENT SPECIFICATION**

(45) Date of publication and mention
of the grant of the patent:
**24.04.2024 Bulletin 2024/17**

(21) Application number: **18815630.1**

(22) Date of filing: **05.12.2018**

(51) International Patent Classification (IPC):
**G06F 3/0481** *(2022.01)* **G06F 3/0346** *(2013.01)*
**G06F 3/0484** *(2022.01)* **G06F 3/01** *(2006.01)*

(52) Cooperative Patent Classification (CPC):
**G06F 3/0346; G02B 27/017; G06F 1/163;
G06F 3/011; G06F 3/017; G06F 3/04815;
G06F 3/04845; G06F 30/12; G06T 17/30;
G06T 19/20;** G02B 2027/0187; G06T 2200/24;
G06T 2219/2021

(86) International application number:
**PCT/EP2018/083618**

(87) International publication number:
**WO 2019/110649 (13.06.2019 Gazette 2019/24)**

(54) **THREE DIMENSIONAL DRAWING TOOL AND METHOD**

DREIDIMENSIONALES ZEICHENGERÄT UND METHODE

OUTIL POUR DESSINER EN TROIS DIMENSIONS ET MÉTHODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2017 GB 201720354**

(43) Date of publication of application:
**14.10.2020 Bulletin 2020/42**

(73) Proprietor: **Goggle Collective Ltd.
Guildford, Surrey GU1 3UW (GB)**

(72) Inventor: **JOHNSTON, Neil
Guildford
Surrey GU1 3UW (GB)**

(74) Representative: **Dunlop, Hugh Christopher
Maucher Jenkins
Seventh Floor Offices
Artillery House
11-19 Artillery Row
London SW1P 1RT (GB)**

(56) References cited:
**US-A- 5 973 678**

• **Benjamin Rüth: "Computer-Aided Design in Virtual Reality", , 28 February 2017 (2017-02-28), XP055561299, Retrieved from the Internet: URL:https://www5.in.tum.de/pub/rueth_2017_thesis.pdf [retrieved on 2019-02-25]**
• **SACHS E ET AL: "3-DRAW: A TOOL FOR DESIGNING 3D SHAPES", IEEE COMPUTER GRAPHICS AND APPLICATIONS, IEEE SERVICE CENTER, NEW YORK, NY, US, vol. 11, no. 6, 1 November 1991 (1991-11-01), pages 18-26, XP000237425, ISSN: 0272-1716, DOI: 10.1109/38.103389**
• **Gravity Sketch: "Gravity Sketch VR - Oculus Rift Introduction", Youtube, 2 August 2017 (2017-08-02), page 1 pp., XP054979881, Retrieved from the Internet: URL:https://www.youtube.com/watch?v=XDCm Dj s9z5l [retrieved on 2019-11-05]**
• **Gravity Sketch: "Gravity Sketch VR Quick Car Sketch 3X speed", Youtube, 25 May 2017 (2017-05-25), page 1 pp., XP054979882, Retrieved from the Internet: URL:https://www.youtube.com/watch?v=stFeF9 N-T0o [retrieved on 2019-11-05]**

- James W Robbins: "Gravity Sketch VR, Drawing a car tips and tricks PT3", , 17 August 2017 (2017-08-17), page 1, XP054980292, Retrieved from the Internet: URL:https://www.youtube.com/watch?v=Pl0xuh l2FoY [retrieved on 2020-03-09]
- CAD Class: "AutoCAD - Curve Surface Modeling (Basic)", YouTube, 2 February 2015 (2015-02-02), pages 1-1, XP054980136, Retrieved from the Internet: URL:https://www.youtube.com/watch?v=HyyWv 9 PuP5E [retrieved on 2020-01-22]
- TOVI GROSSMAN ET AL: "Creating principal 3D curves with digital tape drawing", CHI 2002 CONFERENCE PROCEEDINGS. CONFERENCE ON HUMAN FACTORS IN COMPUTING SYSTEMS. MINNEAPOLIS, MN, APRIL 20 - 25, 2002; [CHI CONFERENCE PROCEEDINGS. HUMAN FACTORS IN COMPUTING SYSTEMS], NEW YORK, NY : ACM, US, 20 April 2002 (2002-04-20), pages 121-128, XP058357587, DOI: 10.1145/503376.503398 ISBN: 978-1-58113-453-7
- KARA ET AL: "An evaluation of user experience with a sketch-based 3D modeling system", COMPUTERS AND GRAPHICS, ELSEVIER, GB, vol. 31, no. 4, 1 August 2007 (2007-08-01) , pages 580-597, XP022262115, ISSN: 0097-8493, DOI: 10.1016/J.CAG.2007.04.004

## Description

### Field of the Invention

This invention relates to drawing tools, for example to assist in the drawing and design of motor cars and other vehicles, but generally for computer-aided design in three dimensions.

### Background

Splines are used by draftsmen to draw curved shapes. In computer-aided design (CAD), a spline is defined by a mathematical algorithm, typically a function defined piecewise by polynomials, typically a sequence of individual curves joined to form a larger curve. Some drawing packages make use of cardinal splines. A cardinal spline is specified by an array of control points on a curve, and a tension parameter. Once a spline has been generated, the control points can be moved in order to edit the spline. Cardinal splines are typically drawn in 2D and have limitations. For example, if the tension parameter is too high, it is not possible to draw tight curves but if the tension parameter is too low, the curve may have an appearance that it unduly organic for particular applications, and may require excessive editing to devise a shape to the designer's satisfaction.

When drawing in 3D, most CAD tools require that a particular 2D plane is selected, and features are projected onto that plane. Editing can be performed in the selected plane or perpendicular to it. For example, control points of a line can be moved in the selected plane or perpendicular to it. If a curved line is edited in this way, it is often necessary to select different views to fully visualize the effect of a change.

US5412770 describes a method of reshaping parametrically expressed free forms on a CAD system by simultaneously moving multiple control points.

In the field of automotive design and nautical and aeronautical design, there is an increasing need to be able to generate and edit 3D virtual representations of vehicles, aircraft and the like with smooth curves, in particular aerodynamic curves. This needs to be achieved with speed and ease of use and deliver a result with minimum of editing.

The use of virtual reality is of growing importance to many design-based industries. Typically, a user will make use of a headset and one or more controllers to access tools in a virtual reality environment. The tools are then used to create and edit representations of three-dimensional objects in the virtual reality environment.

US2016/0370971A1 describes systems and methods for producing a representation of a display of a three-dimensional virtual reality environment and defining a dress form object within the virtual reality environment. Tools are provided to modify images by drawing, drafting, painting, scribbling, moving, illuminating or shadowing.

US 6,629,065 B1 describes expanding and moving existing shapes.

Benjamin Rüth: "Computer-Aided Design in Virtual Reality", 28 February 2017 (2017-02-28), XP055561299, Retrieved from the Internet on 2019-02-25: URL:https://www5.in.tum.de/pub/ rueth_2017_thesis.pdf, is a masters thesis disclosing various features related to computer-aided design in virtual reality.

SACHS E. et al.: "3-Draw: A Tool for Designing 3D Shapes", IEEE Computer Graphics and Applications, vol. 11, no. 6, 1 November 1991 (1991-11-01), pages 18-26, XP000237425 relates to a new type of CAD system that includes a CAD interface that allows users to design complex free-form shapes by entering information directly in three dimensions using a pair of hand-held, six-degree-of-freedom sensors.

Gravity Sketch: "Gravity Sketch VR Quick Car Sketch 3X speed", YouTube, 25 May 2017 (2017-05-25), XP054979882, Retrieved from the Internet on 2019-11-05: URL: https://www.youtube.com/watch?v=stFeF9N-T0o, relates to demonstration of creating and editing lines, curves, and objects in Gravity Sketch(TM).

Additional demonstrations of Gravity Sketch(TM) can be found in the following disclosures:

Gravity Sketch: "Gravity Sketch VR - Oculus Rift Introduction", Youtube, 2 August 2017 (2017-08-02), XP054979881, Retrieved from the Internet on 2019-11-05: URL:https://www.youtube.com/watch? v=XDCmDjs9z5I.
James W Robbins: "Gravity Sketch VR, Drawing a car tips and tricks PT3", Youtube, 17 August 2017 (2017-08-17), XP054980292, Retrieved from the Internet on 2020-03-09: URL:https:// www.youtube.com/watch?v=PI0xuhI2FoY.

CAD Class: "AutoCAD - Curve Surface Modeling (Basic)", YouTube, 2 February 2015 (2015-02-02), XP054980136, Retrieved from the Internet on 2020-01-22: URL:https:// www.youtube.com/watch?v=HyyWv9PuP5E , discloses how to create a surface in AutoCAD.

TOVI GROSSMAN ET AL: "Creating principal 3D curves with digital tape drawing", CHI 2002 CONFERENCE PROCEEDINGS. CONFERENCE ON HUMAN FACTORS IN COMPUTING SYSTEMS. MINNEAPOLIS, MN, APRIL 20 - 25, 2002; [CHI CONFERENCE PROCEEDINGS. HUMAN FACTORS IN COMPUTING SYSTEMS], NEW YORK, NY : ACM, US, 20 April 2002 (2002-04-20), pages 121-128, XP058357587, DOI: 10.1145/503376.503398 ISBN: 978-1-58113-453-7, relates to drawing 3D curves by drawing series of 2D curves using 2D tape drawing.

KARA ET AL: "An evaluation of user experience with a sketch-based 3D modeling system", COMPUTERS AND GRAPHICS, ELSEVIER, GB, vol. 31, no. 4, 1 August 2007 (2007-08-01), pages 580-597, XP022262115, ISSN: 0097-8493, DOI: 10.1016/J.CAG.2007.04.004, relates to a review of user experience of a particular 3D modelling system.

There is scope for improving the ease-of-use of 3D CAD tools, particularly for drawing of objects having smooth continuous, graceful curves, such as vehicles, aeroplanes, boats, etc. that have aerodynamic qualities.

## Summary of the Invention

The invention is as defined in the appended claims.

A drawing tool is provided for assisting in the preparation of drawings of a three dimensional, 3D, object, including: a stereoscopic display for creating a 3D virtual reality image of the object being drawn; means for tracking movement of a pointer in three dimensions in real space; means for representing a line as a spline or a set of adjoining splines having control points; means for presenting the line and its control points in 3D virtual space and for representing the pointer as a virtual pointer in the same 3D virtual space; and means for selecting an edit function by which movement of the pointer in real space causes movement of the virtual pointer in the 3D virtual space and causes a control point in the 3D virtual space to move in three dimensions and thereby change the shape of the line in three dimensions.

The pointer is a hand-held device such as a controller or a stylus having means for receiving start-of-line and end-of line inputs. The stylus may have infra-red sensors or an infra-red source and complementary sources or sensors are provided for measuring the position of the stylus. A processor can record the position of the pointer from start to end of a free-drawn line, whereby movement of the controller in real space between the start-of-line and end-of-line inputs causes a free-drawn line to be created in the 3D virtual space.

The splines are preferably B-splines with a set of adjoining straight lines generated associated with the line. The straight lines are connected at control points and have a first line, a last line and at least one line therebetween. The first line has the same gradient as the start of the free-drawn line, the last line has the same gradient as the end of the free-drawn line and the free-drawn line is fitted to the straight lines by a curve-fitting function.

The processor computes the splines, the straight lines and the control points, and preferably selects the straight lines and the control points according to a distance-minimizing function that minimizes distances between samples on the splines and samples on the straight lines.

The splines are preferably constrained to third-order polynomial functions. Adjacent splines preferably join each other at a knot where the gradient of one spline matches the gradient of the adjacent spline.

A method of drawing a line in three dimensions is also provided. The method comprises: waving a pointer from a start position to an end position while viewing a track of the stylus using a virtual reality stereoscopic imaging device; recording the track of the pointer in three dimensions; presenting, in three dimensional virtual space, a representation of the track as a line together with a series of straight lines to which the line is curve-fitted, the straight lines being connected by control points; causing one of the control points to be moved in three-dimensional virtual space; re-calculating the curve-fitted line according to the new control point; and re-presenting the line.

The method includes causing an end-of-line control point of a first line to be moved to connect with a second line in the virtual space and to be joined to the second line. Joining of the control point of the first line to a control point of the second line followed by movement of the joined control point preferably causes both lines to be re-shaped. Joining of the control point of the first line to a mid-line position on the second line preferably causes movement of the control point of the first line to be constrained to the locus of the second line.

Joining of a plurality of lines in a closed perimeter may, upon user command, cause a surface to be calculated and selectively displayed. Selection of a virtual command to fill the surface preferably causes the surface to be displayed with a selected colour or texture.

The method may also comprise selecting a plane of symmetry, wherein the step of presenting the line includes presenting a symmetrical image of the line and wherein the step of moving a control point on one side of the plane causes the line and its symmetrical image to be re-shaped and represented.

Causing a control point at the end of the line (or its mirror image) to be moved to the plane of symmetry preferably causes the line and its symmetrical image to meet and join.

Lines can be joined to each other in a number of ways. One way is by causing a control point of a first line (e.g. the end) to occupy the same position as a control point on a second line (e.g. the end of the second line). The two control points become one, common, control point. Moving that control point causes both lines to change shape.

Connecting two points with precision can be very difficult, especially in 3D virtual reality. The need for precision is avoided by use of "auto snapping". The user explicitly requests to join two splines, and they are then connected via their nearest points - which may be at their ends (e.g. to form an L shape), or an end-to-middle (to form a Y shape) or middle-to-middle (to form a X shape). In each case, the junction becomes the shared end control point of the resulting 2-4 splines as described. The user merely has to position the two splines close to each other to ensure the desired result.

A particular case of this type of joining is the bringing of a spline's control point to the central plane, causing it to meet and automatically link with its mirror image. This causes the ends of the two lines to be locked to a point on the central plane. (Apart from this, two lines joined in this particular scenario behave like any other two connected lines. Indeed they still behave like a symmetrical pair of lines subject only to that constraint - neither of them can be removed from the central plane.)

The step of presenting a symmetrical image of the line preferably includes presenting a symmetrical image of the series of straight lines and the step of causing the line and its symmetrical image to meet preferably also causes the series of straight lines and their symmetrical image to join. In this way, a control point at the end of the curve-fitted line and a control point at the end of its mirror image become a single control point.

A preferred embodiment or embodiments of the invention will now be described, by way of example only, with reference to the accompanying drawings.

**Brief description of the drawings**

Fig. 1 is a diagram that shows a headset accessing virtual reality content with a computing device in VR space.
Figs. 2A-C are example screenshots of interactive regions in VR space.
Fig. 3 is an example screenshot of lines being drawn in VR space.
Fig. 4 is an example screenshot of a line about to be edited in VR space.
Fig. 5 is an example screenshot of a line being edited in VR space.
Fig. 6 is a flow diagram depicting a method of drawing lines in VR space.
Fig. 7 is a flow diagram depicting a method of editing lines in VR space.
Fig. 8 is a diagram of a B-Spline.
Fig. 9 is an example screenshot of a line and its mirror version in VR space.
Fig. 10 is an example screenshot of a line and its mirror version being moved closer together in VR space.
Figs. 11A-B are example screenshots of interactive regions in VR space with and without a visible 3D core.
Figs. 12A-B are example screenshots of a slider being used to change the depth of a 3D core in VR space.
Fig. 13 is an example screenshot of an interactive region in VR space.
Fig. 14 is a flow diagram depicting a method of drawing and editing surfaces in VR space.

**Detailed description**

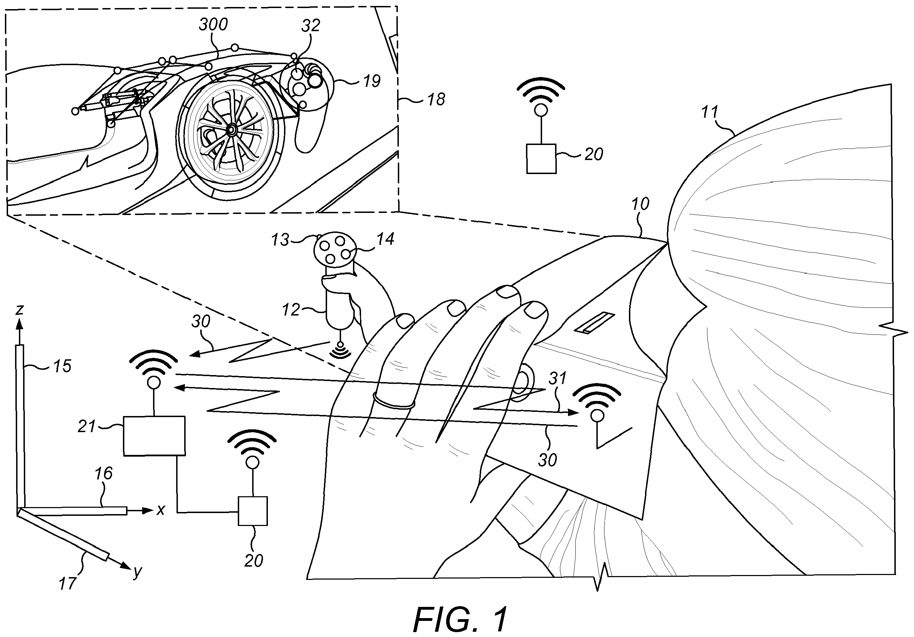

Referring to Fig. 1, a virtual reality design tool is shown that comprises a headset **10,** a controller **12,** base stations **20** and a computer **21.**

The headset **10,** to be worn by a user **11,** displays three-dimensional virtual reality (VR) space **18.** The VR space has tools in the form of a virtual controller **19** available for the user **11.** The VR space **18** comprises one or more lines **300,** the creation and manipulation of which will be discussed in further detail in due course.

The controller **12** comprises various buttons **14** and a plurality of IR sensors. (These are not shown, but there may be any number from 3 to 24 such sensors on different positions/faces of the controller.) The headset has similar IR sensors. The buttons **14** preferably comprise a trigger button, a grip button, a thumbstick and others. The controller may have a pointer **13,** but (as will be explained) this has no function in the real world and merely represents a virtual pointer in the virtual world. An example of a controller is described in US2017/0139481A1.

The pointer **13** corresponds to the part of the virtual controller **19** that can interact with the VR space, similar to the way a mouse icon is displayed on a PC monitor.

The base stations **20** are connected (wired or wirelessly) to the computer **21.** Although only two are shown, more can be implemented. The majority of inputs are received from the main controller **12,** but if the user **11** has a second controller in the other hand, the application can be configured to receive inputs from this controller as well. The user **11** can flip the control scheme from one hand to the other.

In Fig. 1, the user's hand is shown holding a visor of the headset **10.** It will be understood, however, that the user **11** is preferably provided with a second controller (e.g. similar to controller **12**) with auxiliary inputs on the second controller. These can be swapped for right/left handedness of the user. Alternatively, the user **11** may use another type of controller, such as a pushbutton or a pedal.

In operation, the base stations **20** emit infra-red signals modulated with synchronization signals. These are received by the plurality of sensors on the controller **12** and on the headset. Upon receiving a signal from the base stations **20,** the sensors measure the time of receipt of the synchronization signals and report these by wireless signals **30** to the computer **21.** The computer **21** can then determine the distance of each of the plurality of sensors from the base stations **20** based on the respective time intervals between the transmitting and receiving of the infra-red signals. In this way, the computer **21** can calculate the absolute position and orientation of the controller **12** and of the headset **10** at any time.

(Alternatively, the controller may have IR transmitters and there may be multiple IR sensors distributed in the vicinity at the base stations, in which case the base stations measure the time of receipt of the IR signals from the controller.)

This information is used to generate the image to be displayed, and the image is relayed by wireless signals **31** to the headset **10,** which also displays the position and orientation of the controller **12** in the VR space **18** in the form of the virtual controller **19.**

The motion of the controller **12** through 3D space, denoted by a z-axis **15,** an x-axis **16** and a y-axis **17,** can then be matched by the motion of the virtual controller **19** through VR space.

The virtual controller **19** comprises virtual buttons **32,** which correspond to the buttons **14** on the controller **12.** Pressing the buttons **14** simultaneously causes the virtual buttons **32** to change colour/shade or show some other manifestation of having been pressed, enabling the user **11** to interact with the VR space. The controller **12** may provide haptic feedback to the hand of the user **11.**

Alternatively, instead of a stylus-like controller with IR transmitters and sensors, the apparatus could comprise a pair of cameras in different viewing planes, and image-recognising software that is configured to recognise and track a pointer, such as the tip of the user's finger.

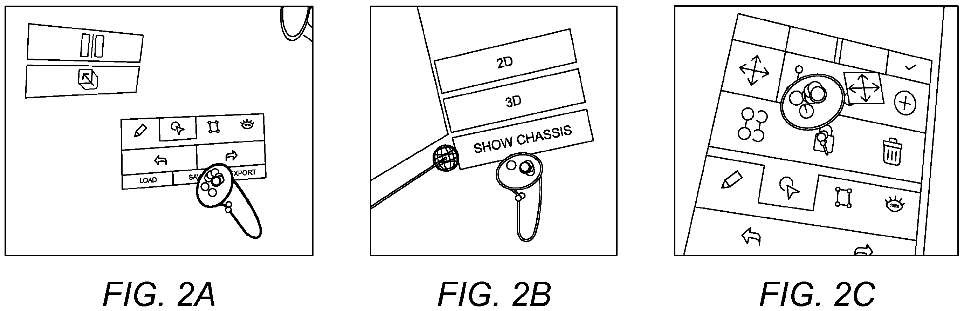

Referring now to Figs. 2A-C, three different screenshots of VR space **18** are shown. Depending on the direction in which the user **11** is looking, Figs 2A, 2B or 2C may appear in the VR space. Each figure shows different buttons in VR space.

The buttons shown in VR space can be interacted with and their associated tools can then be selected by moving the controller **12** to align the virtual controller **19** with the required area of the VR space and pressing one or more of the relevant buttons **14.** For example, there may be a "show chassis" button, which enables the user **11** to view the 3D core **350** of the design, manifested in this case as a car chassis. There may be buttons to toggle between 2D and 3D editing. There may also be buttons to enable the user **11** to save, load, or delete designs. When toggling between two alternative modes, the wording on a virtual button changes to the opposite mode. This is illustrated in Fig. 2B for the commands SHOW CHASSIS and HIDE CHASSIS but could equally be used to toggle between 3D mode and 3D mode (and for other functions).

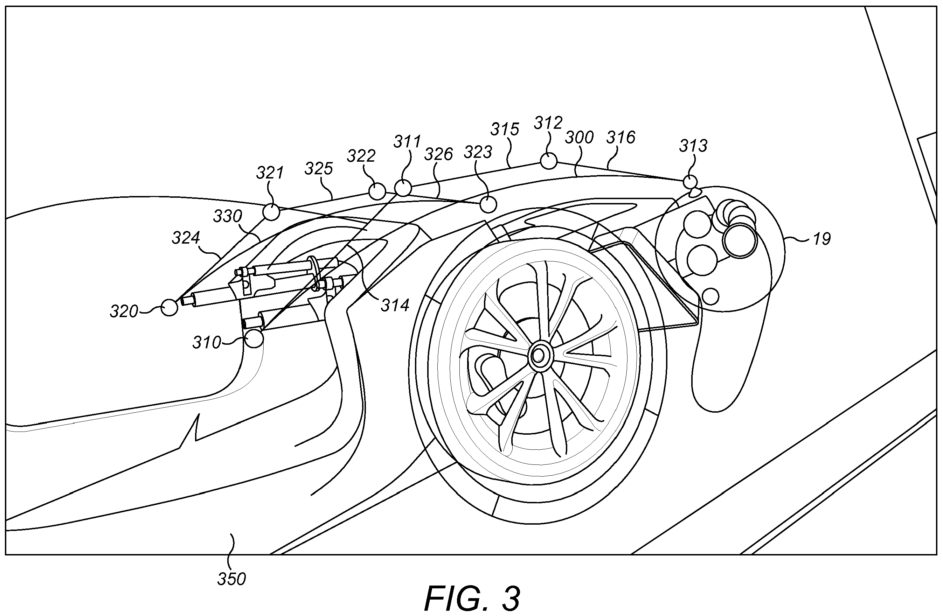

Referring now to Fig. 3, the VR space **18** may display a line **300,** an associated mirror line **330** and a 3D core **350,** in this case manifested as a car chassis. Not shown in Fig. 3 is a virtual mirror running through the 3D core **350** from left to right with respect to Fig. 3.

After drawing a line **300** in VR space using the controller **12,** control points **311** and **312** will also be generated, joined together by a straight line **315** and connected to the ends **310** and **313** of the line **300** by straight lines **314** and **316.** It should be noted that the controls points **311** and **312** are not on the line **300** being controlled by the control points. It should also be noted that the ends **310** and **313** of the line **300** are both also control points.

As a line **300** is generated, a mirror line **330** will also be created. The mirror line is formed by reflecting the line **300** in the virtual mirror. The control points **311** and **312** also have associated mirror control points **321** and **322,** joined together by a straight line **325** and connected to the ends **320** and **323** of the mirror line **330** by straight lines **324** and **326.**

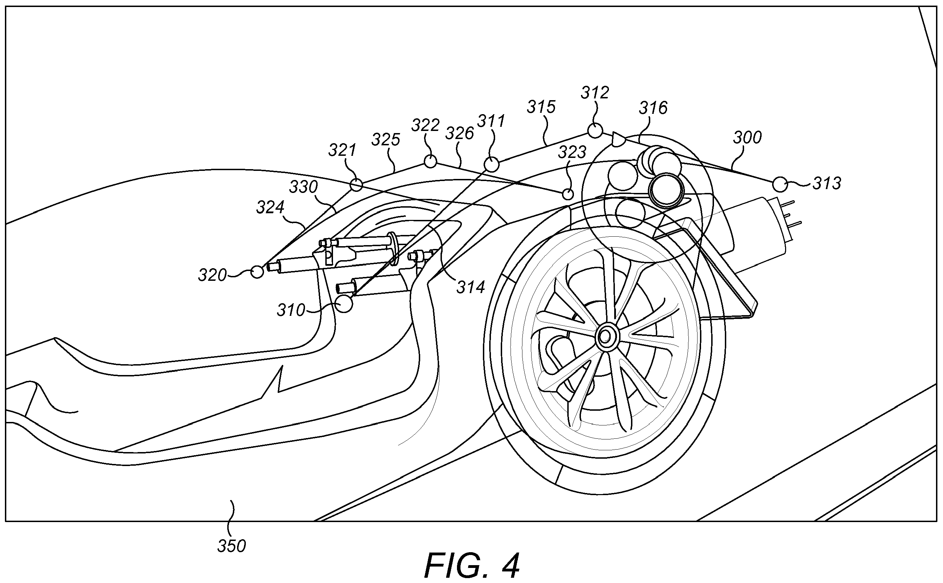

Referring now to Fig. 4, the VR space **18** is shown to display the line **300** as it is about to be edited.

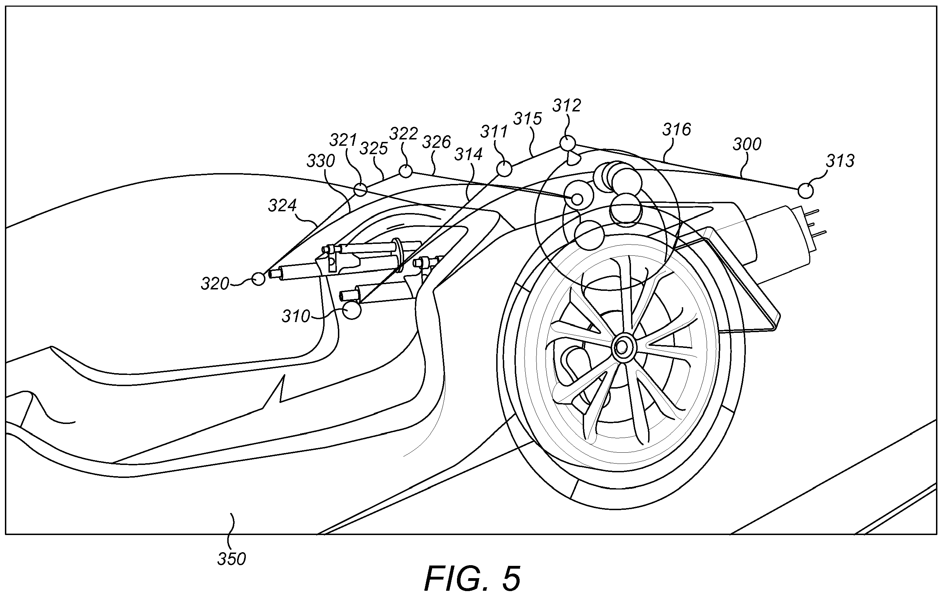

A control point **312** of the line **300** is selected by moving the controller **12** through 3D space to align the virtual controller **19** with the required control point **312.** A control button is depressed or otherwise activated (as will be described). The shape and length of line **300** can then subsequently be edited, as described with reference to Fig. 5.

Referring now to Fig. 5, the VR space **18** displays the line **300** being edited.

As control point **312** is selected and moved to the left with respect to Fig. 4 through VR space using the controller **12,** the shape and length of line **300** changes depending on the new placement of the control point **312.**

The mirror control point **322** of mirror line **330** simultaneously moves through VR space in the same manner and the shape and length of mirror line **330** also changes accordingly. The connecting straight lines **314, 315** and **316** and their corresponding mirror straight lines **324, 325** and **326** also move accordingly. The ends **310** and **313** of line **300** do not move when control point **312** is moved, nor do the corresponding ends **320** and **323** (hidden from view in Fig. 5) of mirror line **330.**

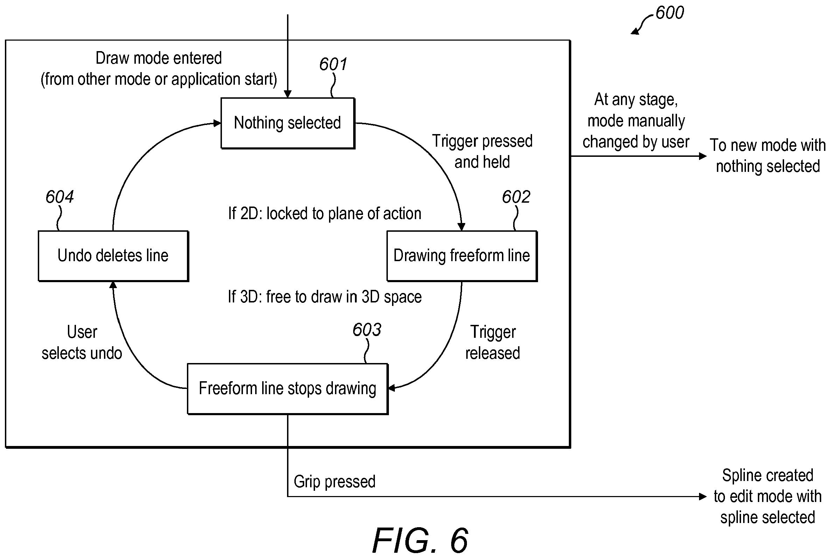

Referring now to Fig. 6, a flow diagram **600** depicts a method for drawing a line in VR space. It should be appreciated that not all steps need be followed in this method.

When the application is launched, it begins in Draw mode. The user can at any point manually switch to Edit mode or to Surface mode.

At block **601,** the application is in Draw mode, having arrived there either by switching from another mode or from the application start. Nothing is selected at this stage.

At block **602,** the user **11** begins to draw a freeform line. If the user is drawing in 2D, the line will be locked to the plane of action. If the user is drawing in 3D, they are free to utilise all the 3D space in VR. The user uses the buttons **14** on the controller **12,** preferably the trigger button, to draw a line. The user presses and holds the trigger button to create the starting point of the line. Still holding the trigger button, the user moves the controller **12** freely, causing a line to be drawn matching the movements of the controller **12.**

At block **603,** the user stops drawing a freeform line. The user releases the trigger button and the line stops being drawn. At this stage, the user can then switch to Edit mode by using the buttons **14** on the controller **12,** preferably the grip button. The user presses the grip button and the line is converted into a spline via a curve fitting algorithm (described below). This spline is automatically selected and the user may proceed to Edit mode.

To the user **11,** it appears as though the line has been "painted" in mid-air or other position in relation to the core chassis.

For many applications of the invention, the user expects to create something symmetrical. As the line is being drawn, a mirror line is also drawn on the opposite side of the virtual mirror. If the line is later edited or deleted, the mirror line will also be edited or deleted in the same way.

Alternatively, the user may decide to proceed to block **604** and delete the line. The user can select the undo command, which deletes the line. The user then arrives back at block **601** and can repeat the previous steps.

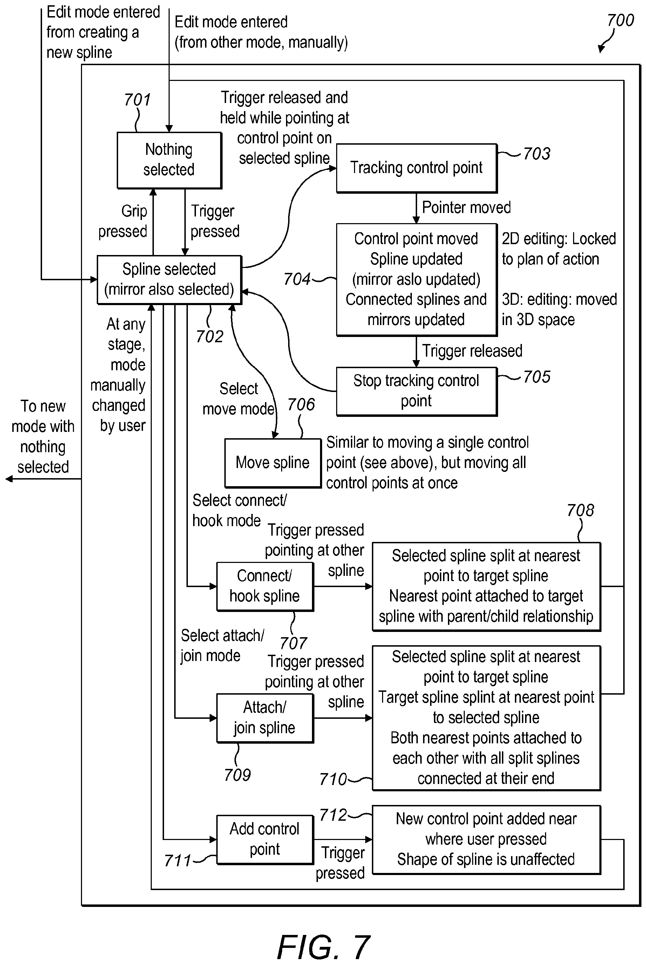

Referring now to Fig. 7, a flow diagram **700** depicts a method for editing a line in VR space. It should be appreciated that not all steps need be followed in this method.

Throughout this method, the application program is in Edit mode, having arrived there manually from another mode, or automatically after creating a new spline (see Fig. 6). At any stage, the user can leave the method by manually selecting another mode. The user will then switch to the new mode with nothing selected.

If the user has entered Edit mode manually, the process begins at block **701,** with nothing selected.

The user can then proceed to block **702** by selecting a spline. The user moves the controller **12** to align the virtual controller **19** with the desired spline in VR space. The user uses the buttons **14** on the controller **12,** preferably the trigger button, to select the spline.

If the user has entered Edit mode automatically after creating a new spline, the process begins at block **702.** The spline and its automatically-generated mirror version are both selected.

The user can return to block **701** by deselecting the selected spline. The user uses the buttons **14** on the controller **12,** preferably the grip button, to deselect the spline. Nothing is selected and the user can then return to step **702** by selecting either another spline or the recently deselected one.

The user can then begin to edit the selected spline. At block **703,** the user tracks a control point on the selected spline. The user moves the controller **12** to align the virtual controller **19** with the desired control point of the selected spline in VR space. The user uses the buttons **14** on the controller **12,** preferably the trigger button, to select the control point. The user presses and holds the trigger button to select the control point.

Still holding the trigger button, the user moves the controller **12** freely, causing the control point to be dragged in a path matching the movements of the controller **12.**

At block **704,** as the control point is being moved, the spline is recalculated to show the effect of the movements. The lines connecting the selected control point with other control points and/or line end points also move accordingly. The mirror version of the spline also updates accordingly. If the user is editing in 2D, the control point will be locked to the plane of action. If the user is drawing in 3D, the control point can be moved to any position in VR space. Note that this dragging movement can be in any direction in the virtual space. Movement of the control point is not limited to a particular plane or dimension.

At block **705,** the user stops tracking the control point. The user releases the trigger and the control point stops being moved. The user can then return to block **702** for further editing.

After selecting a spline at block **702,** the user may decide to move the entire selected spline, rather than just a control point. The user can select Move mode, which enables the line to be moved. At block **706,** the movement is carried out in a similar manner to blocks **703-705.** After moving the spline, the user can then return to block **702** for further editing.

After selecting a spline at block **702,** the user may decide to connect or hook it to a second spline. By selecting Connect/Hook mode, the program arrives at block **707.**

The user moves the controller **12** to align the virtual controller **19** with a second spline in VR space. The user uses the buttons **14** on the controller **12,** preferably the trigger button, to choose this second spline to hook the first spline to. The user presses the trigger button and the first spline hooks to the second spline.

At block **708,** the nearest end of the first spline is hooked onto the nearest point of the second spline. The shape, position and control points of the second spline remain unchanged and so it acts as a parent spline in the new configuration. The appearance of the first spline and its dependencies is recalculated, since one of its control points has been moved. It acts as a child spline in the new configuration and can be moved along the parent spline without affecting the shape, position or control points of the parent spline. The user can then return to block **702** for further editing.

After selecting a spline at block **702,** the user may decide to attach the selected spline to a second spline. By selecting Attach/Join mode, the program arrives at block **709.**

The user moves the controller **12** to align the virtual controller **19** with a second spline in VR space and uses the buttons **14** on the controller **12,** preferably the trigger button, to choose this second spline to attach the first spline to. The user presses the trigger button and the first spline attaches to the second spline.

At block **710,** the nearest end of the first spline is connected to the nearest point on the second spline. If the nearest point of the second spline is at one of its ends, the two splines share the same control point at their ends. If the nearest point of the second spline is somewhere along its length, the second spline is split at that point into two new splines. These two new splines, along with the first spline, all share the same control point at their ends. The appearance of the first spline and its dependencies are recalculated, since one of its control points has been moved. The user can then cause the program to return to block **702** for further editing.

After selecting a spline at block **702,** the user can then proceed to block **711** and add a control point. The user moves the controller **12** to align the virtual controller **19** with a point in VR space near the selected spline. The user uses the buttons **14** on the controller **12,** preferably the trigger button, to choose a point at which to add a control point. The user presses the trigger button to add the control point.

At block **712,** a new control point has been added to the spline at the point of the spline nearest to the point chosen by the user. The shape of the spline is unaffected. The user can then return to block **702** for further editing.

When a control point is added, existing control points may move according to the curve-fitting algorithm, so as to retain the shape of the curve despite it having one extra control point (because, for example, the sum-of-squares minimization results in a different solution when there is an extra control point). The user can then move and edit the spline as before.

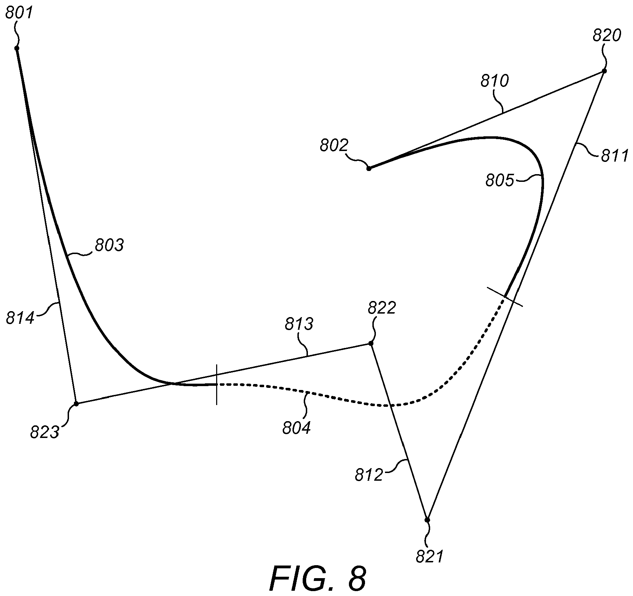

Referring now to Fig. 8, an example of a line represented as B-splines is shown. In this case, the line comprises three component curves (splines) **803, 804** and **805.** The component curves join at positions ("knots") shown by dashed lines, but these are of no consequence to the user of the system. The ends of the component curves and the dashed lines are not visible. They are shown here for explanation only. Each component curve has the same continuity properties as its adjoining component curve (e.g. same gradient in each of two dimensions - i.e. in the plane of the image as shown and in a perpendicular plane tangential to the line at the joining knot). This is a constraint on the component curve function.

Each curve is defined by a polynomial function. For example, curve **805** may be a second or third order polynomial. Curve **803** may also be a portion of a second or third order polynomial. Curve **804** may be a third order polynomial (or may be a second order polynomial subject to a curving constraint at the end where it adjoins curve **803).** Each component curve may comprise subcomponents (splines), in which case, each subcomponent may be a lower order polynomial.

The control points are sampled from user input in real time, so the number of sample points is proportional (within the upper and lower bounds) to the length of the resultant spline (or, more particularly, proportional to the time taken for the user to draw the line). A slowly drawn line will be given more control points than a quickly drawn line, up to the maximum number of control points (e.g. 6).

Each inflexion causes an additional control point to be added, subject to the same maximum. (I.e. a quickly drawn line with one inflexion will have one control point more than a line drawn in the same time but with no inflexions.)

The knots are not constrained to uniform spacing along the line.

The second derivative of a second order B-spline need not be continuous at the knots.

The curve "fits" or is "fitted to" a polygon (an open polygon) comprising straight lines **810, 812, 813** and **814.** The end sections of the polygon (lines **814** and **810**) have the same gradient as the line at the respective end points. The fitting function is preferably a least-mean-squared fitting function, as will be explained.

As well as end control points **801** and **802,** the curve has intermediate control points **820, 821, 822** and **823** at the corners of the polygon (the intersections between straight lines).

In the present system, a line is preferably provided with 2 or 3 mid control points. A small number of control points contributes to simple, efficient editing of smooth elegant curves, but lines may be provided with as many as 5 or 6 control points (i.e. one at each end and up to 3 or 4 in the middle). The number is preferably a system design option but could be presented to the user as a user option.

In the illustrated example, there is an inflexion in the curve - i.e. a reversal of gradient as the curve flows from section **803** to section **804.** For this reason, in the 2D example of Fig. 8, line **813** crosses the curve (and line **812** crosses back again). (It may be noted, of course, that when the line of Fig. 8 is a 3D line, it is possible that the appearance of an inflexion is merely an illusion and that there are no inflexions and no "crossing" of the curve by the sides of the polygon.)

Inflexions reflect the positioning of the control points. If a control point is moved, this may cause a new inflexion.

According to the fitting function, the straight lines of the polygon and their control points are selected such that the sum, for all incremental sections of the line, of distances between a point on the line and a corresponding point on the polygon, is minimized on a mean-squared basis.

For example, for a spline function of degree k, the fitting function seeks to minimize:

$$\sum_{\text{all } x} \left\{ W(x) \left[ y(x) - \sum_i \alpha_i B_{i,k,t}(x) \right] \right\}^2$$

where W(x) is a weight and y(x) is the datum value at x. The coefficients $\alpha_i$ are the parameters to be determined. The knot values may be fixed or they too may be treated as parameters.

The above equation measures the squared distance between a sample point and its corresponding curve point. The error function measures the total accumulation of squared distances. The control points are recursively selected to make this error as small as possible. The number of sample points may be selected according to the computational capacity and the desired speed of calculation, but does not need to be high (e.g. 100 - 1000 sample points are typical).

The order of the spline function (which may be second order but is preferably no higher than third order) and the number of control points are limited to allow the calculations to converge on a single solution.

As the polygon is fitted to the line, so too is the line fitted to the polygon. This means that, once the control points are selected, they can be moved and the fitting function defines a new line to fit to the new polygon.

It is a great advantage of the arrangement described that the line has a smoothly curving function, which is particularly important in the design of vehicles, because the smoothly curving function will have good aerodynamic properties.

When two lines are joined, there is no smoothing of their functions at the join.

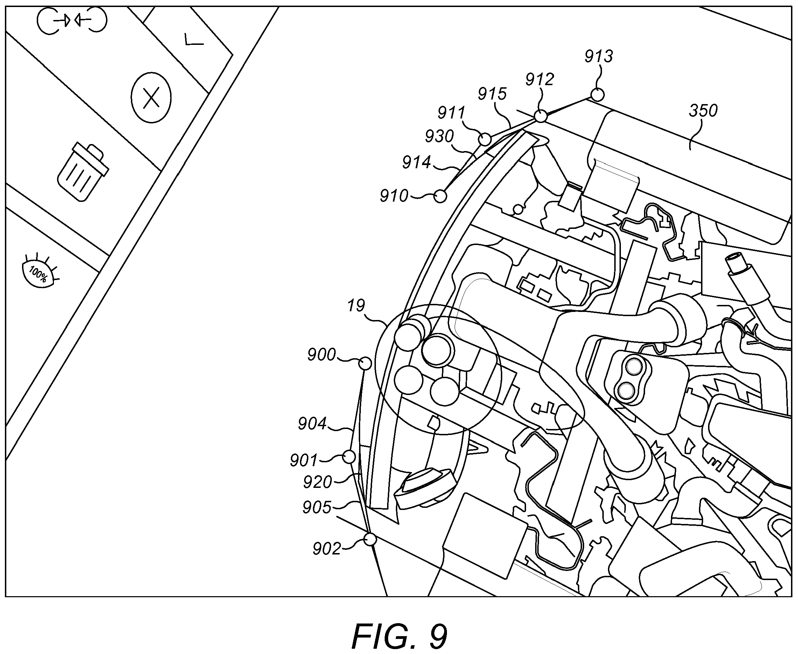

Referring now to Fig. 9, the VR space **18** may display a line **920,** its associated mirror line **930** and the 3D core **350,** in this case manifested as a car chassis. Not shown in Fig. 9 is a virtual mirror running through the 3D core **350** from top-left to bottom-right with respect to Fig. 9.

After drawing a line **920** in VR space using the controller **12,** control points **901** and **902** will also be generated, joined together by a straight line **905** and connected to the ends **900** and **903** (not visible in this figure) of the line **920** by straight lines **904** and **906** (not discernible from line **920** in Fig. 9).

As a line **920** is generated, a mirror line **930** will also be created. The control points **901** and **902** also have associated mirror control points **911** and **912,** joined together by a straight line **915** and connected to the ends **910** and **913** of the mirror line **930** by straight lines **914** and **916** (not discernible from line **930** in Fig. 9).

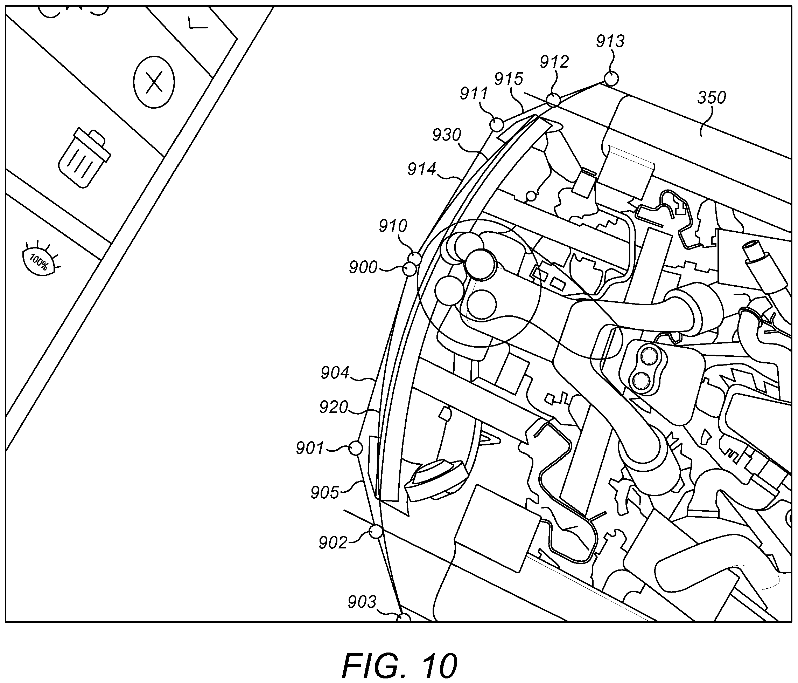

Control point **900** of line **920** is selected by moving the controller **12** through 3D space to align the virtual controller **19** with the required control point **900**. The shape and length of line **920** can then subsequently be edited, as described with reference to Fig. 10.

Referring now to Fig. 10, the VR space **18** may display line **920** being edited, associated mirror line **930** and the 3D core **350**.

As control point **900** is selected and moved to up with respect to Fig. 9 through VR space using the controller **12,** the length of straight line **904** changes depending on the new placement of the control point **900.** This in turn causes the shape and length of line **920** to change. The mirror control point **910** of mirror line **930** simultaneously moves down through VR space towards control point **900** and the shape and length of mirror line **930** also changes accordingly.

When the control point **910** meets the control point **900,** the two lines **920** and **930** merge into a single line. This can be automatic, in which case the lines behave as if one sticks to the other, or it can be user-driven by activation of a "join" button.

When two lines are joined, they retain their status as two lines. They cannot be manipulated together except in the very special case of when the two lines are actually one line and its mirror reflection, which is in fact the case in Figure 9. In this case, the two are moved together only because one is moved and it will cause its reflection to match its movements.

In cases where two lines are joined without being mirrors of each other, moving of one control point does not move "the whole line". The whole line can be selected and moved (translated, rotated or both) by selecting the Move command **706.**

The invention is not necessarily limited to shapes that are defined by spline functions. The system and methods described can be used with shapes defined by other functions. For example a circle (e.g. part of a wheel or an entire wheel) can be drawn in virtual space either by free-drawing a circle or by drawing a radius (or a spoke) and causing the tool to display a circle/wheel of that radius.

In the case of a wheel, it can be presented with radius and thickness and with control points for each, whereby the user can select a radius control point and drag it inwards or outwards to reduce or expand the radius (with the movement of the control point constrained along a radial locus) or the user can select a width control point and expand or reduce the width of the wheel (with the movement of the control point constrained along an axial locus).

Circles and wheels can have the same selection, attaching, splitting and editing functions as have been described above for lines. In the case of splitting, for example, a function may be provided to divide a circle or wheel into sectors that retain their link to the original circle centre.

Similarly, a box frame can be drawn as a unit with control points for expanding or reducing in three dimensions and with the ability to join other lines to the box frame. In the case of joining a control point of a line to a control point of a box frame, movement of that control point will cause the line to change shape and cause the frame to change size, but the frame will maintain its box shape.

As has been described, the newly described tool provides functions that are specific to splines (drawing a freeform line, curvefitting it, editing control points) and functions that are more generic than splines (attaching one part of a model to another, mirroring, creating surfaces between edges, etc).

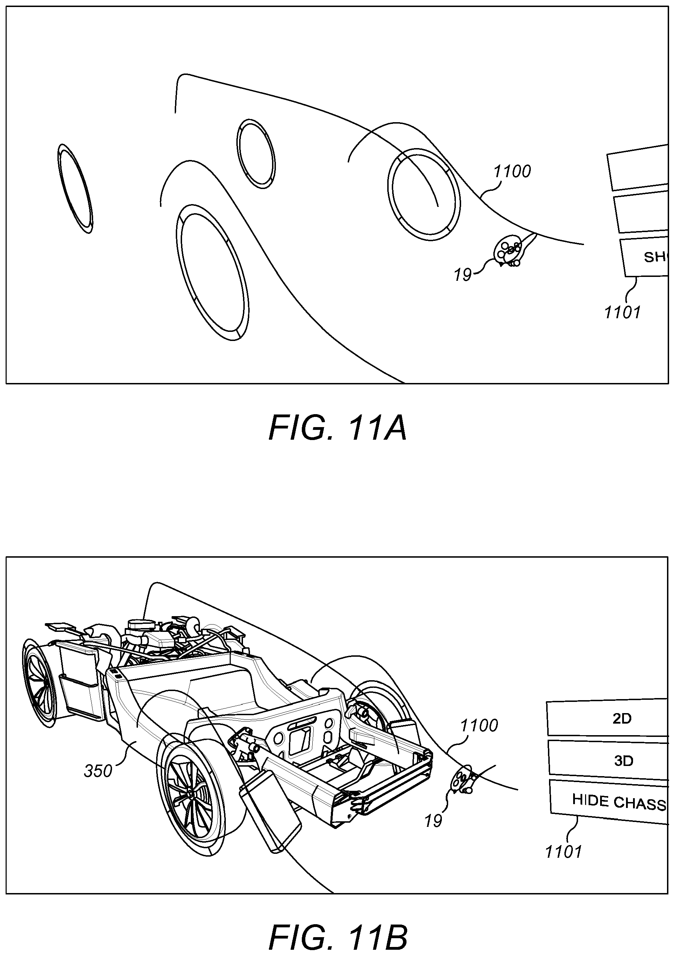

Referring now to Fig. 11A and Fig. 11B, two different screenshots of VR space **18** are shown. In Fig. 11A, the 3D core **350** is invisible. Only one or more lines **1100** are visible. The user **11** can use the controller **12** to align the virtual controller **19** with the interactive button **1101.** If the 3D core **350** is invisible, as in Fig. 11A, the button **1101** will display the text "Show chassis".

In Fig. 11B, the user **11** has selected this button, meaning that the 3D core **350** is now visible. The button **1101** now reads "Hide chassis". The user **11** can select this button again to hide the 3D core **350**.

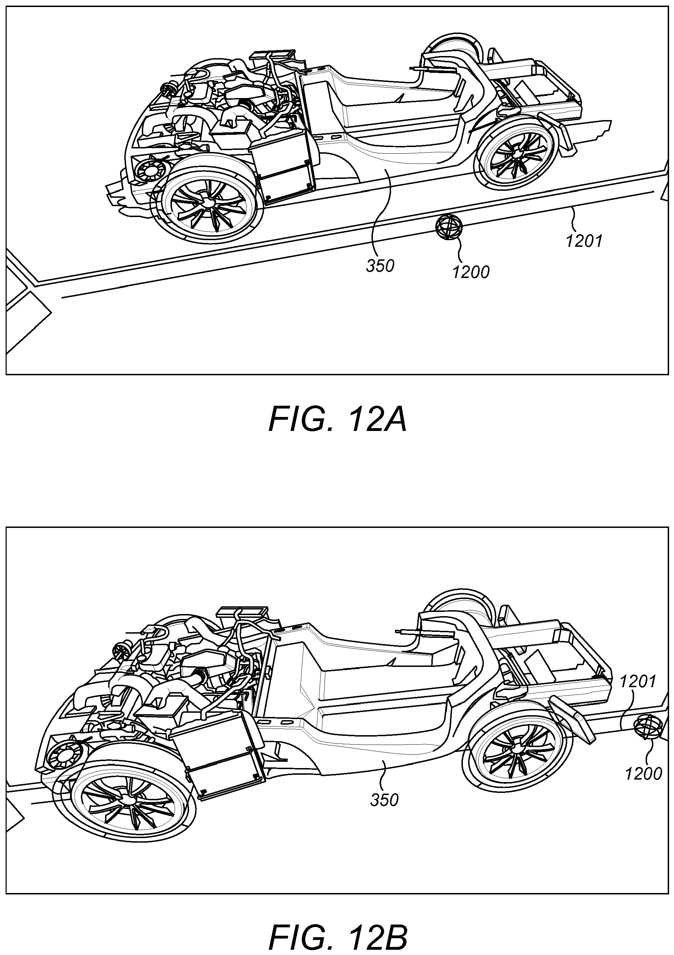

Referring now to Fig. 12A and Fig. 12B, two different screenshots of VR space **18** are shown. In Fig. 12A, the 3D core **350** is visible, as is a slide control **1200** on a sliding bar **1201**. The user can move the controller **12** to align the virtual controller **19** with the slide control **1200**. The user uses the buttons **14** on the controller **12,** preferably the trigger button, to select the slide control **1200**. The user presses and holds the trigger button to select the slide control **1200**. Still holding the trigger button, the user can move the controller **12** left or right. The slide control **1200** moves left or right along the sliding bar **1201** accordingly. The depth of the 3D core **350** with respect to the drawing board also changes accordingly.

As the plane of the drawing board is moved deeper (into the plane of the paper as illustrated), more of the design becomes visible. Thus, in Fig. 12A, most of the design is below or behind the drawing board and only the uppermost features are fully visible. By contrast in Fig. 12B approximately half of the design is above the board and is visible while half is below and is invisible or is feint/suppressed.

In Fig. 12B, the user **11** has moved the slide control **1200** to the right along sliding bar **1201** with respect to Fig. 12B. The 3D core **350** now protrudes further out of the drawing board than in Fig. 12A.

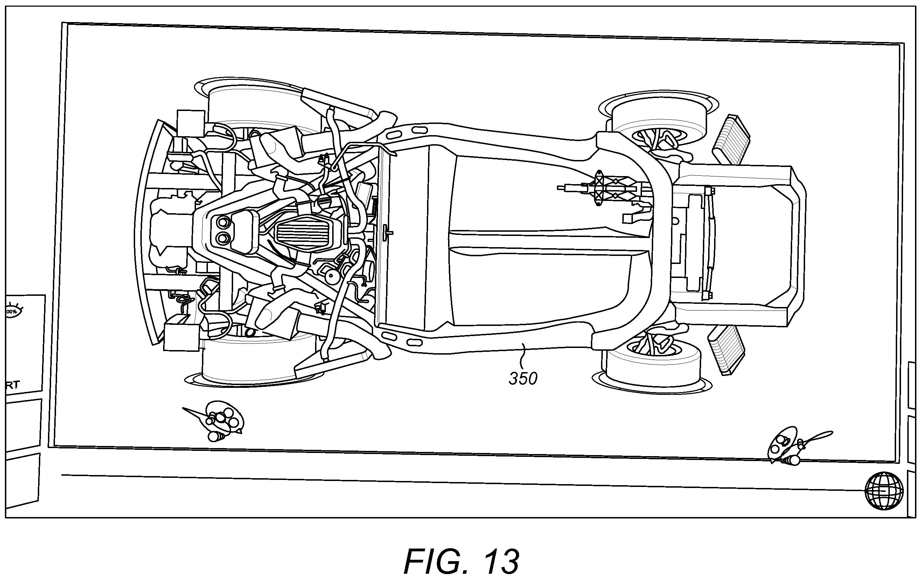

Referring now to Fig. 13, an example screenshot of VR space **18** is shown. The 3D core **350** is visible from a different angle. By pointing the controller to a control tool such as a slider (or wheel or the like), the entire image can be caused to rotate about a selected axis. There may be a first slider (e.g. vertically positioned) for rotating about a horizontal axis and a second slider (e.g. horizontally positioned) for rotating about a vertical axis.

Thus the entire design (with or without its core) can be viewed from any angle as if suspended in mid air in front of the user.

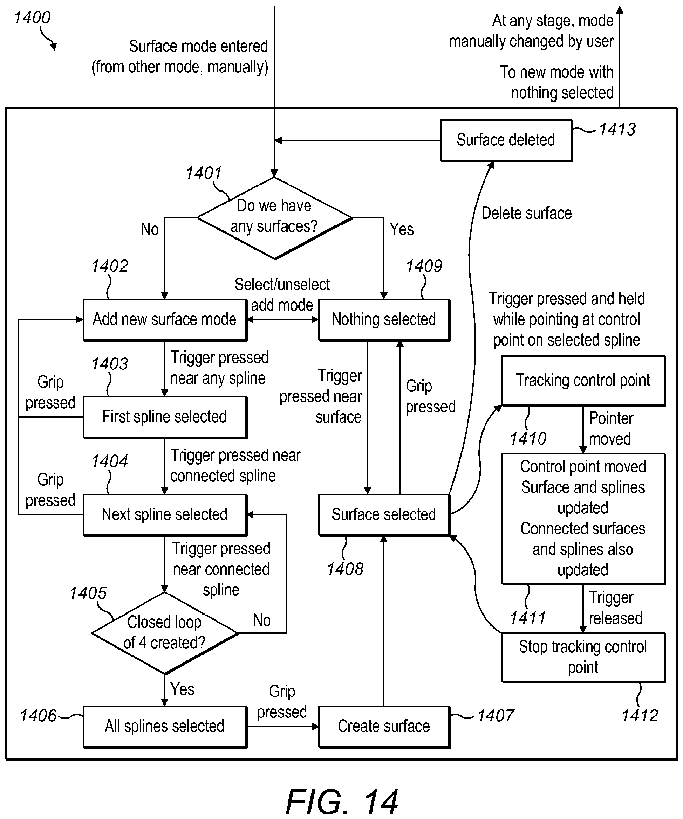

Referring now to Fig. 14, a flow diagram **1400** depicts a method of creating and editing surfaces in VR space. It should be appreciated that not all steps need be followed in this method.

Throughout this method, the application program is in Surface mode, having arrived there manually from another mode. At any stage, the user **11** can leave the method by manually selecting another mode. The user will then switch to the new mode with nothing selected.

The process begins at block **1401,** with nothing selected. If there are no surfaces already present, the user proceeds to block **1402** by selecting the Add functionality. The user moves the controller **12** to align the virtual controller **19** with a point in VR space near a desired spline. The user uses the buttons **14** on the controller **12,** preferably the trigger button, to select this spline.

Alternatively, the user can unselect Add mode and can proceed to block **1409.**

At block **1403,** a first spline has been selected. The user again moves the controller **12** to align the virtual controller **19** with a point in VR space near another desired spline. The user uses the buttons **14** on the controller **12,** preferably the trigger button, to select this spline. The user can then proceed to block **1404.**

Alternatively, the user can return to block **1402**. The user uses the buttons **14** on the controller **12,** preferably the grip button, to deselect the spline and the program returns to block **1402.**

At block **1404,** another spline has been selected, in addition to the first one. This process is then repeated until a closed loop of four splines has been selected. The user can then proceed through blocks **1405** and **1406** with all four splines selected. If four splines have not been selected, the user **11** returns to block **1404** to select more splines.

Note that four splines is merely a preferred example. A closed loop can be formed from three splines or indeed from two splines or one (looping back on itself). Indeed, a closed loop can be created from a multi-sided perimeter of splines.

Alternatively, the user can return to block **1402**. The user uses the buttons **14** on the controller **12,** preferably the grip button, to deselect the splines and the program then returns to block **1402.**

The user uses the buttons **14** on the controller **12,** preferably the grip button, to create a surface using the four selected splines (or other number of splines forming a closed loop). The user presses the grip button to create the surface.

At block **1407,** the surface has been created, using the connected splines as a perimeter. The surface appears as a smooth, contoured patch of material defined by the continuous loop of splines which form its perimeter. This surface is automatically selected and so the user can proceed to block **1408.**

Alternatively, upon entering Surface mode at block **1401,** the user may see that one or more surfaces are already present. The user proceeds to block **1409,** with nothing selected.

The user can select the Add functionality and proceed to block **1402.**

Alternatively, the user can select one of the pre-existing surfaces. The user moves the controller **12** to align the virtual controller **19** with a point in VR space near a desired surface. The user uses the buttons **14** on the controller **12,** preferably the trigger button, to select this surface. The user **11** then proceeds to block **1408.**

At block **1408,** a surface has been selected. The user sees the control points of all the perimeter splines, as well as a grid of controls points representing the breadth of the surface. The user can use the buttons **14** on the controller **12,** preferably the grip button, to deselect a surface and the program returns to block **1409.**

Alternatively, upon selecting a surface, the user can begin to edit the selected surface. At block **1410,** the user tracks a control point on the selected surface. The user moves the controller **12** to align the virtual controller **19** with the desired control point of the selected surface in VR space. The user uses the buttons **14** on the controller **12,** preferably the trigger button, to select the control point. The user **11** presses and holds the trigger button to select the control point.

Still holding the trigger button, the user moves the controller **12** freely, causing the control point to be dragged in a path matching the movements of the controller **12.**

At block **1411,** as the control point is being moved, the surface is recalculated to show the effect of the movements. The lines connecting the selected control point with other control points and/or line end points also move accordingly. Thus, reshaping a spline that forms part of a surface causes the surface to be reshaped.

At block **1412,** the user stops tracking the control point. The user releases the trigger and the control point stops being moved. The user can then return to block **1408** for further editing.

The user may decide to delete the selected surface. The user selects the Delete functionality. At block **1413,** the surface has been deleted. The splines that previously made up the surface remain. The program then proceeds back to block **1401.**

Just as splines are mirrored, so too are surfaces and any other drawn or edited artefact (unless the mirror function is selectively disabled for a particular feature).

A drawing tool has been described with reference to examples of operation and examples of objects being drawn, but it will be understood by those in the art that these are non-limiting examples and that modifications of the apparatus, the method and the uses can be made without departing from the invention as defined by the appended claims.

**Claims**

1. A tool for assisting in the preparation of drawings of a three-dimensional, 3D, object, including:

   a stereoscopic display (10) for creating a 3D virtual reality image (18) of the object being drawn;
   a pointer (12) wherein the pointer (12) is a hand-held controller having means for receiving (14) start-of-line and end-of line inputs;
   means for recording the position of the pointer (12) from start to end of a free-drawn line (300);
   means for tracking (20, 21) movement of the pointer (12) in three dimensions (15, 16, 17) in real space, whereby movement of the controller in real space between the start-of-line and end-of-line inputs causes a first free-drawn line (300) to be created in the 3D virtual space, and for repeating for a second free-drawn line (330);
   means for representing (21) the first and second free-drawn lines (300, 330) respectively as at least one spline (803, 804, 805), each spline (803, 804, 805) associated with a series of straight lines (314, 315, 316, 324, 325, 326) to which the spline (803, 804, 805) is curve-fitted, the straight lines (314, 315, 316, 324, 325, 326) being connected by control points (310, 311, 312, 313, 320, 321, 322, 323);
   means for presenting (10) the first and second free-drawn lines (300, 330) and their respective control points (310, 311, 312, 313, 320, 321, 322, 323) in 3D virtual space and for representing the pointer (12) as a virtual pointer (19) in the same 3D virtual space;
   means for selecting (14) an edit function by which movement of the pointer (12) in real space causes movement of the virtual pointer (19) in the 3D virtual space and causes a control point (310, 320) of the first or second free-drawn line (300, 330) in the 3D virtual space to be selected and moved in three dimensions and thereby change the shape of the first or second free-drawn line (300, 330) in three dimensions;
   means for selecting (14) a join function that, when active, permits a user to point to the first free-drawn line (300) in virtual 3D space, select an end-of-line control point of the first free-drawn line (300), move that control point to the second free-drawn line (330) and cause the first free-drawn line (300) to join the second free-drawn line (330); and

means for selecting a surface mode, such that, when in said surface mode, joining of a plurality of lines (300, 330) in a closed perimeter causes a surface to be calculated and selectively displayed, the plurality of joined lines (300, 330) forming the perimeter of the surface.

2. The tool in accordance with claim 1, wherein the control point is selected by aligning the virtual pointer with the desired control point and using a button on the controller (12) to select the control point, and the control point is moved by moving the pointer (12) freely, causing the control point to be dragged in a path matching the movements of the pointer (12).

3. The tool in accordance with claim 1 or 2, wherein a set of adjoining straight lines are generated associated with each line, the straight lines being connected at control points and having a first line, a last line and at least one line therebetween, wherein the first line has the same gradient as the start of the free-drawn line, the last line has the same gradient as the end of the free-drawn line and each free-drawn line is fitted to the straight lines by a curve-fitting function.

4. The tool in accordance with claim 1 or 2, wherein the controller has infra-red sensors or an infra-red source and wherein complementary sources or sensors are provided for measuring the position of the controller.

5. The tool in accordance with claim 4 comprising a processor for computing the splines, the straight lines and the control points, and for selecting the straight lines and the control points according to a distance-minimizing function that minimizes distances between samples on the splines and samples on the straight lines.

6. The tool in accordance with any one of claims 1 to 5 wherein the splines are constrained to third-order polynomial functions.

7. A method of drawing a line in three dimensions, comprising:

waving (602) a pointer (12) from a start position to an end position while viewing a track of the pointer (12) using a virtual reality stereoscopic imaging device (10) in which motion of the pointer (12) is matched by motion of a virtual controller (19) in three-dimensional virtual space;
recording the track of the pointer (12) in three dimensions (15, 16, 17), presenting, in the three-dimensional virtual space, a representation of the track as a first free-drawn line (300) the first free-drawn line (300) represented as at least one spline (803, 804, 805), each spline (803, 804, 805) associated with a series of straight lines (314, 315, 316) to which the spline (803, 804, 805) is curve-fitted, the straight lines (314, 315, 316) being connected by control points (310, 311, 312, 313) that are also presented in the three-dimensional virtual space;
repeating the steps of waving, recording, and presenting for a second free-drawn line (330);
causing (702, 703), using the virtual controller (19), one of the control points (310, 311, 312, 313) of the first or second free-drawn line (300, 330) to be selected and moved in three-dimensional virtual space;
re-calculating (704) the curve-fitted line according to the moved control point;
re-presenting the line;
causing (709, 710, 1402, 1403, 1404, 1407) an end-of-line control point (310) of the first free-drawn line (300) to be moved to connect with the second free-drawn line (330) in the virtual space and to be joined to the second free-drawn line (330); and
causing a surface to be calculated and selectively displayed by joining of a plurality of lines (300, 330) in a closed perimeter, the plurality of joined lines (330, 330) forming the perimeter of the surface.

8. The method of claim 7, wherein:

the control point is selected by aligning the virtual pointer with the desired control point in virtual space and by using a button on the controller (12) to select the control point, and
the control point is moved by moving the pointer (12) freely in real space, causing the control point to be dragged in virtual space along a path matching the movements of the pointer (12) and
movement of the control point in virtual space is stopped by releasing the button on the controller.

9. The method of claim 7 wherein joining of the control point of the first line to a control point of the second line followed by movement of the joined control point causes both lines to be re-shaped.

10. The method of claim 7 wherein joining of the control point of the first line to a mid-line position on the second line causes movement of the control point of the first line to be constrained to the locus of the second line.

11. The method of claim 7 wherein selection of a virtual command to fill the surface causes the surface to be displayed with a selected colour or texture.

12. The method of claim 7, further comprising:
selecting a plane of symmetry, wherein the step of presenting the line includes presenting a symmetrical image of the line and wherein the step of moving a control point on one side of the plane causes the line and its symmetrical image to be re-shaped and represented.

13. The method of claim 12, in which causing a control point at the end of the line (or its mirror image) to be moved to the plane of symmetry causes the line and its symmetrical image to meet and join.

**Patentansprüche**

1. Werkzeug zur Unterstützung bei der Erstellung von Zeichnungen eines dreidimensionalen (3D) Objekts, das Folgendes beinhaltet:

ein stereoskopisches Display (10) zur Erzeugung eines 3D-Virtual-Reality-Bildes (18) des gezeichneten Objekts;
einen Zeiger (12), wobei der Zeiger (12) ein handgehaltener Controller mit Mitteln zum Empfangen (14) von Zeilenanfangs- und Zeilenendeeingaben ist;
Mittel zum Aufzeichnen der Position des Zeigers (12) vom Anfang bis zum Ende einer frei gezeichneten Linie (300);
Mittel zum Verfolgen (20, 21) von Bewegung des Zeigers (12) in drei Dimensionen (15, 16, 17) im realen Raum, wodurch Bewegung des Controllers im realen Raum zwischen den Linienanfangs- und Linienendeeingaben bewirkt, dass eine erste frei gezeichnete Linie (300) im virtuellen 3D-Raum erzeugt wird, und zum Wiederholen für eine zweite frei gezeichnete Linie (330);
Mittel zum Darstellen (21) der ersten und zweiten frei gezeichneten Linie (300, 330) jeweils als mindestens einen Spline (803, 804, 805), wobei jeder Spline (803, 804, 805) mit einer Reihe von geraden Linien (314, 315, 316, 324, 325, 326) assoziiert ist, an die der Spline (803, 804, 805) kurvenangepasst ist, wobei die geraden Linien (314, 315, 316, 324, 325, 326) durch Steuerpunkte (310, 311, 312, 313, 320, 321, 322, 323) verbunden sind;
Mittel zum Präsentieren (10) der ersten und zweiten frei gezeichneten Linien (300, 330) und ihrer jeweiligen Steuerpunkte (310, 311, 312, 313, 320, 321, 322, 323) im virtuellen 3D-Raum und zum Darstellen des Zeigers (12) als virtuellen Zeiger (19) im selben virtuellen 3D-Raum;
Mittel zum Auswählen (14) einer Editierfunktion, durch die Bewegung des Zeigers (12) im realen Raum Bewegung des virtuellen Zeigers (19) im virtuellen 3D-Raum bewirkt und bewirkt, dass ein Steuerpunkt (310, 320) der ersten oder zweiten frei gezeichneten Linie (300, 330) im virtuellen 3D-Raum ausgewählt und in drei Dimensionen bewegt wird und dadurch die Form der ersten oder zweiten frei gezeichneten Linie (300, 330) in drei Dimensionen verändert;
Mittel zum Auswählen (14) einer Vereinungsfunktion, die, wenn sie aktiv ist, es einem Benutzer erlaubt, auf die erste frei gezeichnete Linie (300) im virtuellen 3D-Raum zu zeigen, einen Linienende-Steuerpunkt der ersten frei gezeichneten Linie (300) auszuwählen, diesen Steuerpunkt zu der zweiten frei gezeichneten Linie (330) zu bewegen und zu bewirken, dass sich die erste frei gezeichnete Linie (300) mit der zweiten frei gezeichneten Linie (330) vereint; und
Mittel zum Auswählen eines Oberflächenmodus, so dass in dem genannten Oberflächenmodus das Vereinen mehrerer Linien (300, 330) in einem geschlossenen Umfang bewirkt, dass eine Oberfläche berechnet und selektiv angezeigt wird, wobei die mehreren vereinten Linien (300, 330) den Umfang der Oberfläche bilden.

2. Werkzeug nach Anspruch 1, wobei der Steuerpunkt durch Ausrichten des virtuellen Zeigers auf den gewünschten Steuerpunkt und Verwenden einer Taste am Controller (12) zum Auswählen des Steuerpunkts ausgewählt und der Steuerpunkt durch freies Bewegen des Zeigers (12) bewegt wird, wodurch bewirkt wird, dass der Steuerpunkt auf einem Pfad entsprechend den Bewegungen des Zeigers (12) gezogen wird.

3. Werkzeug nach Anspruch 1 oder 2, wobei ein Satz von angrenzenden geraden Linien mit jeder Linie assoziiert erzeugt wird, wobei die geraden Linien an Steuerpunkten verbunden sind und eine erste Linie, eine letzte Linie und mindestens eine Linie dazwischen aufweisen, wobei die erste Linie denselben Gradienten wie der Anfang der frei gezeichneten Linie hat, die letzte Linie denselben Gradienten wie das Ende der frei gezeichneten Linie hat und jede frei gezeichnete Linie an die geraden Linien durch eine Kurvenanpassungsfunktion angepasst wird.

4. Werkzeug nach Anspruch 1 oder 2, wobei der Controller Infrarotsensoren oder eine Infrarotquelle hat, und wobei komplementäre Quellen oder Sensoren zum Messen der Position des Controllers vorgesehen sind.

5. Werkzeug nach Anspruch 4, das einen Prozessor zum Berechnen der Splines, der geraden Linien und der Steuerpunkte und zum Auswählen der geraden Linien und der Steuerpunkte gemäß einer Abstandsminimierungsfunktion umfasst, die Abstände zwischen Proben auf den Splines und Proben auf den geraden Linien minimiert.

6. Werkzeug nach einem der Ansprüche 1 bis 5, wobei die Splines auf Polynomfunktionen dritter Ordnung beschränkt sind.

7. Verfahren zum Zeichnen einer Linie in drei Dimensionen, das Folgendes beinhaltet:

Schwenken (602) eines Zeigers (12) von einer Startposition zu einer Endposition beim Betrachten einer Spur des Zeigers (12) mit Hilfe eines stereoskopischen Virtual-Reality-Bildgebungsgeräts (10), in dem Bewegung des Zeigers (12) von Bewegung eines virtuellen Controllers (19) im dreidimensionalen virtuellen Raum angeglichen wird;

Aufzeichnen der Spur des Zeigers (12) in drei Dimensionen (15, 16, 17), Präsentieren, in dem dreidimensionalen virtuellen Raum, einer Darstellung der Spur als eine erste frei gezeichnete Linie (300), wobei die erste frei gezeichnete Linie (300) als mindestens ein Spline (803, 804, 805) dargestellt ist, wobei jeder Spline (803, 804, 805) mit einer Reihe von geraden Linien (314, 315, 316) assoziiert ist, an die der Spline (803, 804, 805) kurvenangepasst ist, wobei die geraden Linien (314, 315, 316) durch Steuerpunkte (310, 311, 312, 313) verbunden sind, die ebenfalls im dreidimensionalen virtuellen Raum dargestellt sind;

Wiederholen der Schritte des Schwenkens, Aufzeichnens und Präsentierens für eine zweite frei gezeichnete Linie (330);

Bewirken (702, 703), mit Hilfe des virtuellen Controllers (19), dass einer der Steuerpunkte (310, 311, 312, 313) der ersten oder zweiten frei gezeichneten Linie (300, 330) ausgewählt und im dreidimensionalen virtuellen Raum bewegt wird;

Neuberechnen (704) der kurvenangepassten Linie gemäß dem bewegten Steuerpunkt;

erneutes Präsentieren der Linie;

Bewirken (709, 710, 1402, 1403, 1404, 1407), dass ein Linienende-Steuerpunkt (310) der ersten frei gezeichneten Linie (300) bewegt wird, um sich mit der zweiten frei gezeichneten Linie (330) im virtuellen Raum zu verbinden und mit der zweiten frei gezeichneten Linie (330) vereint zu werden; und

Bewirken, dass eine Oberfläche berechnet und selektiv angezeigt wird, durch Vereinen mehrerer Linien (300, 330) in einem geschlossenen Umfang, wobei die mehreren vereinten Linien (330, 330) den Umfang der Oberfläche bilden.

8. Verfahren nach Anspruch 7, wobei:

der Steuerpunkt durch Ausrichten des virtuellen Zeigers mit dem gewünschten Steuerpunkt im virtuellen Raum und durch Verwenden einer Taste am Controller (12) zum Auswählen des Steuerpunkts ausgewählt wird, und der Steuerpunkt durch Bewegen des Zeigers (12) frei im realen Raum bewegt wird, wodurch bewirkt wird, dass der Steuerpunkt im virtuellen Raum entlang eines Pfades entsprechend den Bewegungen des Zeigers (12) gezogen wird, und

Bewegung des Steuerpunkts im virtuellen Raum durch Loslassen der Taste am Controller gestoppt wird.

9. Verfahren nach Anspruch 7, wobei das Vereinen des Steuerpunkts der ersten Linie mit einem Steuerpunkt der zweiten Linie gefolgt von der Bewegung des vereinten Steuerpunkts eine Neuformung beider Linien bewirkt.

10. Verfahren nach Anspruch 7, wobei das Vereinen des Steuerpunkts der ersten Linie mit einer Mittellinienposition auf der zweiten Linie bewirkt, dass die Bewegung des Steuerpunkts der ersten Linie auf den Ort der zweiten Linie beschränkt wird.

11. Verfahren nach Anspruch 7, wobei das Auswählen eines virtuellen Befehls zum Füllen der Oberfläche bewirkt, dass die Oberfläche mit einer ausgewählten Farbe oder Textur angezeigt wird.

**12.** Verfahren nach Anspruch 7, das ferner Folgendes beinhaltet:
Auswählen einer Symmetrieebene, wobei der Schritt des Präsentierens der Linie das Präsentieren eines symmetrischen Bildes der Linie beinhaltet, und wobei der Schritt des Bewegens eines Steuerpunkts auf einer Seite der Ebene bewirkt, dass die Linie und ihr symmetrisches Bild neu geformt und neu präsentiert werden.

**13.** Verfahren nach Anspruch 12, wobei das Bewirken, dass ein Steuerpunkt am Ende der Linie (oder ihres Spiegelbildes) in die Symmetrieebene bewegt wird, bewirkt, dass die Linie und ihr symmetrisches Bild sich treffen und vereinen.

**Revendications**

**1.** Un outil d'assistance à la préparation de dessins d'un objet tridimensionnel, 3D, comprenant :

un dispositif d'affichage stéréoscopique (10) destiné à la création d'une image de réalité virtuelle en 3D (18) de l'objet qui est dessiné,
un pointeur (12) où le pointeur (12) est un dispositif de commande portatif possédant un moyen de réception (14) d'entrées de début de ligne et de fin de ligne,
un moyen d'enregistrement de la position du pointeur (12) du début à la fin d'une ligne à tracé libre (300),
un moyen de suivi (20, 21) du déplacement du pointeur (12) en trois dimensions (15, 16, 17) dans un espace réel, grâce à quoi le déplacement du dispositif de commande dans un espace réel entre les entrées de début de ligne et de fin de ligne amène une première ligne à tracé libre (300) à être créée dans l'espace virtuel 3D, et de répétition pour une deuxième ligne à tracé libre (330),
un moyen de représentation (21) des première et deuxième lignes à tracé libre (300, 330) respectivement sous la forme d'au moins une spline (803, 804, 805), chaque spline (803, 804, 805) étant associée à une série de lignes droites (314, 315, 316, 324, 325, 326) avec lesquelles la spline (803, 804, 805) est ajustée en courbe, les lignes droites (314, 315, 316, 324, 325, 326) étant raccordées par des points de contrôle (310, 311, 312, 313, 320, 321, 322, 323),
un moyen de présentation (10) des première et deuxième lignes à tracé libre (300, 330) et de leurs points de contrôle respectifs (310, 311, 312, 313, 320, 321, 322, 323) dans un espace virtuel 3D et de représentation du pointeur (12) sous la forme d'un pointeur virtuel (19) dans le même espace virtuel 3D,
un moyen de sélection (14) d'une fonction d'édition au moyen de laquelle un déplacement du pointeur (12) dans un espace réel amène un déplacement du pointeur virtuel (19) dans l'espace virtuel 3D et amène un point de contrôle (310, 320) de la première ou de la deuxième ligne à tracé libre (300, 330) dans l'espace virtuel 3D à être sélectionné et déplacé en trois dimensions, et ainsi modifier la forme de la première ou de la deuxième ligne à tracé libre (300, 330) en trois dimensions,
un moyen de sélection (14) d'une fonction de jointure qui, lorsqu'elle est active, permet à un utilisateur de pointer vers la première ligne à tracé libre (300) dans l'espace virtuel 3D, de sélectionner un point de contrôle de fin de ligne de la première ligne à tracé libre (300), de déplacer ce point de contrôle vers la deuxième ligne à tracé libre (330) et d'amener la première ligne à tracé libre (300) à se joindre à la deuxième ligne à tracé libre (330), et
un moyen de sélection d'un mode de surface, de sorte que, lorsque dans ledit mode de surface, la jointure d'une pluralité de lignes (300, 330) dans un périmètre fermé amène une surface à être calculée et affichée de manière sélective, la pluralité de lignes jointes (300, 330) formant le périmètre de la surface.

**2.** L'outil selon la Revendication 1, où le point de contrôle est sélectionné par l'alignement du pointeur virtuel avec le point de contrôle souhaité et l'utilisation d'un bouton sur le dispositif de commande (12) de façon à sélectionner le point de contrôle, et le point de contrôle est déplacé par le déplacement du pointeur (12) librement, amenant le point de contrôle à être glissé sur un trajet correspondant aux déplacements du pointeur (12).

**3.** L'outil selon la Revendication 1 ou 2, où un ensemble de lignes droites attenantes sont générées associées à chaque ligne, les lignes droites étant raccordées à des points de contrôle et possédant une première ligne, une dernière ligne et au moins une ligne entre celles-ci, où la première ligne possède le même gradient que le début de la ligne à tracé libre, la dernière ligne possède le même gradient que la fin de la ligne à tracé libre et chaque ligne à tracé libre est ajustée aux lignes droites par une fonction d'ajustement de courbe.

**4.** L'outil selon la Revendication 1 ou 2, où le dispositif de commande possède des capteurs infra-rouges ou une source infra-rouge et où des sources ou des capteurs complémentaires sont fournis pour la mesure de la position du dispositif de commande.

**5.** L'outil selon la Revendication 4 comprenant un processeur destiné au calcul des splines, des lignes droites et des points de contrôle et à la sélection des lignes droites et des points de contrôle en fonction d'une fonction de minimisation de distance qui minimise des distances entre des échantillons sur les splines et des échantillons sur les lignes droites.

**6.** L'outil selon l'une quelconque des Revendications 1 à 5 où les splines sont restreintes à des fonctions polynomiales de troisième ordre.

**7.** Un procédé de tracé d'une ligne en trois dimensions, comprenant :

l'agitation (602) d'un pointeur (12) d'une position de départ vers une position de fin tout en visualisant un tracé du pointeur (12) au moyen d'un dispositif d'imagerie stéréoscopique de réalité virtuelle (10) dans lequel le mouvement du pointeur (12) est mis en correspondance par le mouvement d'un dispositif de commande virtuel (19) dans un espace virtuel tridimensionnel,
l'enregistrement du tracé du pointeur (12) en trois dimensions (15, 16, 17),
la présentation, dans l'espace virtuel tridimensionnel, d'une représentation du tracé sous la forme d'une première ligne à tracé libre (300), la première ligne à tracé libre (300) étant représentée sous la forme d'au moins une spline (803, 804, 805), chaque spline (803, 804, 805) étant associée à une série de lignes droites (314, 315, 316) avec lesquelles la spline (803, 804, 805) est ajustée en courbe, les lignes droites (314, 315, 316) étant raccordées par des points de contrôle (310, 311, 312, 313) qui sont également présentés dans l'espace virtuel tridimensionnel,
la répétition des opérations d'agitation, d'enregistrement et de présentation pour une deuxième ligne à tracé libre (330),
l'opération consistant à amener (702, 703), au moyen du dispositif de commande virtuel (19), un des points de contrôle (310, 311, 312, 313) de la première ou la deuxième ligne à tracé libre (300, 330) à être sélectionné et déplacé dans un espace virtuel tridimensionnel,
le recalcul (704) de la ligne ajustée en courbe en fonction du point de contrôle déplacé,
la re-présentation de la ligne,
l'opération consistant à amener (709, 710, 1402, 1403, 1404, 1407) un point de contrôle de fin de ligne (310) de la première ligne à tracé libre (300) à être déplacé de façon à se raccorder à la deuxième ligne à tracé libre (330) dans l'espace virtuel et à être joint à la deuxième ligne à tracé libre (330), et
l'opération consistant à amener une surface à être calculée et affichée de manière sélective par la jointure d'une pluralité de lignes (300, 330) dans un périmètre fermé, la pluralité de lignes jointes (330, 330) formant le périmètre de la surface.

**8.** Le procédé selon la Revendication 7, où :

le point de contrôle est sélectionné par l'alignement du pointeur virtuel avec le point de contrôle souhaité dans un espace virtuel et par l'utilisation d'un bouton sur le dispositif de commande (12) de façon à sélectionner le point de contrôle, et
le point de contrôle est déplacé par le déplacement du pointeur (12) librement dans l'espace réel, amenant le point de contrôle à être glissé dans l'espace virtuel le long d'un trajet correspondant aux déplacements du pointeur (12) et
le déplacement du point de contrôle dans l'espace virtuel est arrêté par la libération du bouton sur le dispositif de commande.

**9.** Le procédé selon la Revendication 7 où la jointure du point de contrôle de la première ligne à un point de contrôle de la deuxième ligne suivie par le déplacement du point de contrôle joint amène les deux lignes à être re-formées.

**10.** Le procédé selon la Revendication 7 où la jointure du point de contrôle de la première ligne à une position de milieu de ligne sur la deuxième ligne amène le déplacement du point de contrôle de la première ligne à être limité au locus de la deuxième ligne.

**11.** Le procédé selon la Revendication 7 où la sélection d'une commande virtuelle destinée à remplir la surface amène la surface à être affichée avec une couleur ou une texture sélectionnée.

**12.** Le procédé selon la Revendication 7, comprenant en outre :
la sélection d'un plan de symétrie, où l'opération de présentation de la ligne comprend la présentation d'une image symétrique de la ligne et où l'opération de déplacement d'un point de contrôle sur un côté du plan amène la ligne et son image symétrique à être re-formées et re-présentées.

13. Le procédé selon la Revendication 12, dans lequel l'opération consistant à amener un point de contrôle à la fin de la ligne (ou son image miroir) à être déplacé vers le plan de symétrie amène la ligne et son image symétrique à se rencontrer et se joindre.

FIG. 1

EP 3 721 331 B1

FIG. 2A

FIG. 2B

FIG. 2C

FIG. 3

FIG. 4

FIG. 5

EP 3 721 331 B1

*FIG. 6*

EP 3 721 331 B1

FIG. 7

FIG. 8

**FIG. 9**

EP 3 721 331 B1

**FIG. 10**

**FIG. 11A**

**FIG. 11B**

*FIG. 12A*

*FIG. 12B*

FIG. 13

*1400*

Surface mode entered
(from other mode, manually)

At any stage, mode
manually changed by user

To new mode with
nothing selected

Surface deleted ~*1413*

*1401*

Do we have
any surfaces?

No

Yes

*1402*

Select/unselect
add mode

Add new surface mode

Nothing selected ~*1409*

Grip
pressed

*1403*

Trigger pressed
near any spline

First spline selected

Trigger
pressed near
surface

Grip
pressed

Trigger pressed and held
while pointing at control
point on selected spline

Tracking control point

*1404*

Trigger pressed near
connected spline

Grip
pressed

Next spline selected

Surface selected

*1410*

Pointer
moved

Control point moved
Surface and splines
updated
Connected surfaces
and splines also
updated

Trigger pressed
near connected
spline

*1405*

*1408*

Closed loop
of 4 created?

No

*1411*

Trigger
released

*1406* ~ All splines selected

Grip
pressed

Create surface ~*1407*

Stop tracking control
point

Delete surface

Yes

*1412*

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5412770 A
- US 20160370971 A1

- US 6629065 B1
- US 20170139481 A1

**Non-patent literature cited in the description**

- **BENJAMIN RÜTH.** *Computer-Aided Design in Virtual Reality,* 28 February 2017, https://www5.in.tum.de/pub/ rueth_2017_thesis.pdf
- **SACHS E. et al.** 3-Draw: A Tool for Designing 3D Shapes. *IEEE Computer Graphics and Applications,* 01 November 1991, vol. 11 (6), 18-26
- **GRAVITY SKETCH.** Gravity Sketch VR Quick Car Sketch 3X speed. *YouTube,* 25 May 2017, https://www.youtube.com/watch?v=stFeF9N-T0o
- **GRAVITY SKETCH.** Gravity Sketch VR - Oculus Rift Introduction. *Youtube,* 02 August 2017, https://www.youtube.com/watch? v=XDCmDjs9z5I

- **JAMES W ROBBINS.** Gravity Sketch VR, Drawing a car tips and tricks PT3. *Youtube,* 17 August 2017, https:// www.youtube.com/watch?v=PI0xuhI2FoY
- **CAD CLASS.** AutoCAD - Curve Surface Modeling (Basic). *YouTube,* 02 February 2015, https:// www.youtube.com/watch?v=HyyWv9PuP5E
- Creating principal 3D curves with digital tape drawing. **TOVI GROSSMAN et al.** CHI 2002 CONFERENCE PROCEEDINGS. CONFERENCE ON HUMAN FACTORS IN COMPUTING SYSTEMS. MINNEAPOLIS, MN, APRIL 20 - 25, 2002; [CHI CONFERENCE PROCEEDINGS. HUMAN FACTORS IN COMPUTING SYSTEMS. ACM, 20 April 2002, 121-128
- An evaluation of user experience with a sketch-based 3D modeling system. **KARA et al.** COMPUTERS AND GRAPHICS. ELSEVIER, 01 August 2007, vol. 31, 580-597